# EUROPÄISCHE PATENTSCHRIFT

(11) **EP 3 497 704 B1**
(45) Veröffentlichungstag und Bekanntmachung des Hinweises auf die Patenterteilung: **28.06.2023**
(21) Anmeldenummer: 17751385.0
(22) Anmeldetag: 10.08.2017
(51) Int. Cl.: H01B 7/40, H01B 7/00, B60R 16/02, H02G 3/04, H01B 7/08

(54) **ELEKTRISCHE FLACHLEITERANORDNUNG UND HERSTELLUNGSVERFAHREN FÜR EINE SOLCHE**
FLAT ELECTRIC CONDUCTOR ARRANGEMENT AND METHOD FOR THE PRODUCTION THEREOF
ENSEMBLE CONDUCTEUR ÉLECTRIQUE PLAT ET PROCÉDÉ DE PRODUCTION CORRESPONDANT

(30) Priorität: 11.08.2016 DE 102016114944; 11.08.2016 DE 102016114943; 11.08.2016 DE 102016114945
(43) Veröffentlichungstag der Anmeldung: 19.06.2019
(73) Patentinhaber: Lisa Dräxlmaier GmbH, 84137 Vilsbiburg (DE)
(72) Erfinder: SPECHT, Klaus, 84144 Geisenhausen (DE); WIMMER, Wolfgang, 94330 Salching (DE); SCHEIDHAMMER, Georg, 84155 Bodenkirchen (DE)
(86) Internationale Anmeldenummer: PCT/EP2017/070282
(87) Internationale Veröffentlichungsnummer: WO 2018/029291

(56) Entgegenhaltungen:
- DE-A1-102006 045 859
- DE-U1- 20 310 581
- JP-A- H1 042 423
- JP-A- 2002 367 439
- JP-A- 2013 037 805
- US-A- 4 034 271

## Beschreibung

### Technisches Gebiet

Die vorliegende Erfindung betrifft eine elektrische Flachleiteranordnung, mit einem schienenförmigen Flachleiter, für ein elektrisches Bordnetz eines Fahrzeugs. Ferner betrifft die Erfindung ein Verfahren zur Herstellung einer Flachleiteranordnung für ein elektrisches Bordnetz eines Fahrzeugs.

### Stand der Technik

Flachleiteranordnungen, die wenigstens eine Flachleiterschiene aufweisen, sind bereits aus dem Stand der Technik bekannt.

So offenbart beispielsweise die DE 10 2014 004 431 B4 eine Flachleiteranordnung mit einer Flachleiterschiene, die zur elektrischen Isolation mit einem Kunststoffmantel ummantelt ist. Dabei kann die Flachleiterschiene aus einem Aluminiumwerkstoff extrudiert sein. Auch der Kunststoffmantel kann durch Extrudieren auf die Flachleiterschiene aufgebracht sein. Des Weiteren ist beschrieben, dass auf die Flachleiterschiene zwei zueinander unterschiedliche Kunststoffkomponenten aufgebracht werden, wobei sich eine Kunststoffkomponente einfacher von der Flachleiterschiene entfernen lässt als die andere. Hierfür haftet die eine Kunststoffkomponente besser an der Flachleiterschiene als die andere, was zum Beispiel dadurch bewerkstelligt wird, dass die eine Kunststoffkomponente einen auf die Flachleiterschiene selbsthaftenden Kunststoff aufweist.

Des Weiteren ist aus der DE 10 2014 109 141 A1 eine Flachleiteranordnung bekannt, bei der wenigstens zwei Flachleiterschienen eine Leitergruppe ausbilden und mit einem Wickelband umwickelt werden, das sich mit sich selbst verbinden kann, aber nicht mit den Flachleiterschienen, und diese so zusammengehalten werden. Die so gebildete Leitergruppe kann zum Beispiel über ein Klettband, das mit dem Wickelband verbindbar ist, an einem Gegenelement befestigt werden. Nachteilig daran ist, dass nur Flachleiterschienen aneinander befestigt werden können.

Die nachveröffentlichte deutsche Patentanmeldung mit der Anmeldenummer 102015220115.5 schlägt eine Flachleiteranordnung vor, bei der ein Flachleiter einen Verlegeweg für als Rundleiter ausgebildete elektrische Leiter vorgibt. Die elektrischen Leiter sind mit geringem Abstand parallel zu dem Flachleiter verlegt und können auch auf diesem aufliegen, um eine gute Elektromagnetische Verträglichkeit (EMV) zu gewährleisten. Nachteilig daran ist, dass die Führung der Leiter relativ zu dem Flachleiter einen hohen Montageaufwand bedeutet, da separate Halteteile, Kabelbinder, Wickelbänder oder ähnliches vorgesehen werden müssen.

Die JP2002-367439A offenbart eine Flachleiteranordnung mit einem Kunststoffmantel, wobei der Kunststoffmantel eine Öffnung zur Aufnahme einer Leitung enthält.

### Beschreibung der Erfindung

Eine Aufgabe der Erfindung ist es daher, unter Einsatz konstruktiv möglichst einfacher Mittel eine einfach zu montierende Möglichkeit zu schaffen, mit der sich ein vorzugsweise biegeschlaffer Leiter entlang eines Flachleiters führen lässt.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Eine erfindungsgemäße elektrische Flachleiteranordnung, die insbesondere für die Verwendung als Batterieleitung oder zentrales Stromversorgungssystem in einem Fahrzeug eingerichtet ist, weist wenigstens eine im Wesentlichen formstabile, das heißt im Gegensatz zu einer biegeschlaffen Leitung massiv ausgebildete, Flachleiterschiene auf, die zumindest abschnittsweise mit einem Kunststoffmantel ummantelt ist. Der Kunststoffmantel kann entweder zur elektrischen Isolation, zum mechanischen Schutz oder zu beiden Zwecken vorgesehen sein.

Die Flachleiteranordnung kann auch zwei oder mehr einzelne Flachleiterschienen aufweisen, die vorzugsweise mit einander zugewandten Flachseiten in Dickenrichtung zueinander lagig angeordnet sind. Die Flachleiterschiene kann zum Beispiel aus einem Aluminiumwerkstoff, wie etwa Al 99,5 oder noch reinerem Aluminium, oder einer Aluminiumlegierung, extrudiert oder gewalzt sein. Je nach Anforderung kann die Flachleiterschiene auch aus Kupfer bzw. einer Kupferlegierung bestehen. Die Flachleiterschiene kann in Dickenrichtung eine Stärke von etwa 0,5 mm bis 5,0 mm, vorzugsweise von 1,0 mm bis 3,0 mm und in Querrichtung eine Breite von 5 mm bis 60 mm, vorzugsweise von 15 mm bis 60 mm, aufweisen. Für den Kunststoffmantel eignen sich zum Beispiel Thermoplaste oder thermoplastische Elastomere, insbesondere jedoch Polyolefine, wie etwa PP-Copolymere, PE etc., Polyamide, wie etwa PA12 etc., PVC, TPE oder vernetzendes PE. Beispielsweise weist eine Flachleiterschiene mit einem im Wesentlichen rechteckigen Querschnitt von 60 x 1 mm und einem 0,3 mm starken Kunststoffmantel aus PP eine Durchschlagfestigkeit von 16 kV DC auf, so dass eine solche Flachleiteranordnung sowohl in einem 12V-Bordnetz, einem 48V-Bordnetz als auch im Hochvoltbereich verwendet werden kann.

Erfindungsgemäß ist an dem Kunststoffmantel wenigstens eine Leitungsaufnahme für wenigstens einen zumindest abschnittsweise parallel zur Flachleiterschiene geführten, vorzugsweise biegeschlaffen Leiter, wie etwa einen elektrischen Leiter, eine elektrische Leitung, ein Kabel, einen Lichtwellenleiter oder ähnliches, mit ausgeformt. In anderen Worten erfüllt der ohnehin zur elektrischen Isolation und/oder zum mechanischen Schutz vorhandene Kunststoffmantel eine Doppelfunktion, indem er gleichzeitig auch eine Leitungsaufnahme für einen oder mehrere biegeschlaffe Leiter mit ausbildet. Die Leitungsaufnahme kann so angeordnet sein, dass sich der biegeschlaffe Leiter in Dickenrichtung und/oder in Querrichtung der Flachleiteranordnung mit der Flachleiterschiene überlagert. Bei dem Leiter kann es sich auch um Kabel, einem massiven Leiter oder Litzenleiter handeln, die zum Beispiel als Versorgungs-, Signal- oder Datenleitungen, beispielsweise auch als Beilauf- oder Diagnoseleitungen, verwendet werden. Der biegeschlaffe Leiter weist vorzugsweise einen runden Querschnitt auf. Wenn der Kunststoffmantel in einem Extrusionsverfahren oder Co-Extrusionsverfahren extrudiert oder co-extrudiert wird, kann die Leitungsaufnahme gleich mit extrudiert werden, so dass auch das Ausformen durch Extrudieren bzw. Co-Extrudieren erfolgen kann.

Die Erfindung bietet damit den Vorteil, dass mit konstruktiv einfachen Mitteln eine definierte, gemeinsame Führung, Positionierung und ggf. auch Fixierung für sowohl eine formstabile Flachleiterschiene als auch einen biegeschlaffen Leiter geschaffen wird. Auch die Fertigung und Montage gestalten sich einfach, da die Leitungsaufnahme ggf. einfach mit extrudiert wird. Der biegeschlaffe Leiter kann ebenfalls mit geringem Abstand so zu der Flachleiterschiene positioniert werden, dass sich zusätzlich eine gute elektromagnetische Verträglichkeit (EMV) ergibt.

Um den entlang der Flachleiterschiene geführten Leiter ungehindert mit einem elektrischen Kontaktelement kontaktieren zu können, weist der Kunststoffmantel zumindest abschnittsweise eine Schneidnut zum abschnittsweisen Abtrennen, Wegbiegen, Separieren etc. eines den Leiter aufnehmenden Teils von einem die Flachleiterschiene aufnehmenden Teils auf.

Die Schneidnut kann z.B. eine Materialverjüngung zwischen den beiden Teilen des Kunststoffmantels sein. Das Abtrennen des Teils erfolgt dann beispielsweise mithilfe eines Schneidwerkzeugs.

Alternativ weist der Kunststoffmantel zumindest abschnittsweise eine Sollbruchstelle zwischen dem die Flachleiterschiene aufnehmenden Teil und dem den Leiter aufnehmenden Teil auf.

In diesem Fall kann das Abtrennen des den Leiter aufnehmenden Teils auch ohne Schneidwerkzeug, z.B. durch Abknicken erfolgen.

Eine weitere, vorteilhafte Weiterbildung der Erfindung sieht vor, dass die Leitungsaufnahme durch einen Mantelfortsatz des Kunststoffmantels einstückig damit ausgebildet ist. Das heißt, dass der Kunststoffmantel einfach über den als elektrische Isolation und/oder mechanischen Schutz dienenden Abschnitt hinaus verlängert wird und dieser Mantelfortsatz vorzugsweise durch eine entsprechende Ausformung als Leitungsaufnahme dient. Ein zusätzliches Anformen oder Verbinden der Leitungsaufnahme mit dem Kunststoffmantel entfällt also, vielmehr ist die Leitungsaufnahme integraler Bestandteil des Kunststoffmantels.

Um auch im Fahrzeug verwendete Kabelschächte zu ersetzen bzw. mit einer Flachleiterschiene zu kombinieren, kann die schachtförmige Leitungsaufnahme schachtförmig mit wenigstens einem seitlichen Führungssteg ausgebildet sein. Der Führungssteg ist parallel sowie beabstandet zu einer Schmalseite der Flachleiterschiene angeordnet. Der Führungssteg kann dabei über einen Mantelfortsatz einer Flachseite des Kunststoffmantels an diesen angebunden sein. Damit lässt sich ein biegeschlaffer Leiter in Querrichtung parallel zu der Flachleiterschiene führen. Anstatt sperrige Kabelschächte separat im Fahrzeug zu montieren, werden diese einfach bei der Montage der Flachleiterschiene mit montiert, so dass sich der Montageaufwand für den biegeschlaffen Leiter weiter vereinfachen lässt. Alternativ dazu kann auch zuerst die Flachleiterschiene im Fahrzeug montiert und anschließend die Leitungsaufnahme der Flachleiterschiene zur Verlegung und Positionierung der Leiter genutzt werden.

Um den biegeschlaffen Leiter an oder auf einer Flachseite der Flachleiterschiene bzw. des Kunststoffmantels zu führen, können sich zwei Führungsstege als Mantelfortsätze von zwei sich gegenüberliegenden Schmalseiten des Kunststoffmantels über eine Flachseite des Kunststoffmantels hinaus erstrecken. Damit wird eine doppelseitige Leitungsaufnahme an oder auf einer Flachseite ausgebildet, so dass sich der biegeschlaffe Leiter und die Flachleiterschiene in Dickenrichtung der Flachleiteranordnung überlagern bzw. übereinander angeordnet sind. Zu jedem Führungssteg kann auch ein weiterer Führungssteg in Querrichtung parallel dazu ausgeformt sein, so dass sich zwei, drei oder mehr durch Führungsstege unterteilte, parallele Leitungsführungen ergeben. Dies kann vorteilhaft sein, wenn einzelne Leiter aus einer Mehrzahl von Leitern gebündelt oder zum Beispiel aus EMV-Gründen räumlich getrennt voneinander geführt werden sollen.

Um auch einem dreidimensionalen Verlegeweg folgen bzw. diesen definieren zu können, kann der Kunststoffmantel mit wenigstens zwei unterschiedlichen Biegeachsen räumlich geformt sein. Hierfür kann die linear extrudierte Flachleiterschiene zunächst mit dem Kunststoffmantel ummantelt und danach umgeformt werden.

Um ein Umformen der Flachleiterschiene mit dem daran angeformten Kunststoffmantel zu erleichtern, können der oder die Führungsstege quergeschlitzt sein, um den Kunststoffmantel und/oder die Leitungsaufnahme abschnittsweise bzw. lokal zu schwächen. Zusätzlich werden auch Risse an dem Kunststoffmantel vermieden. Die Querschlitze, die senkrecht zur Längserstreckungsrichtung der Flachleiterschiene bzw. des Kunststoffmantels verlaufen, können beispielsweise kurz vor oder bündig mit einer Flachseite des Kunststoffmantels abschließen. Die Schlitze können beispielsweise durch Schneiden oder ein anderes Trennverfahren eingebracht werden.

Zusätzlich oder alternativ zu dem Querschlitzen können der Kunststoffmantel und/oder die Leitungsaufnahme auch geprägt sein, um eine lokale Schwächung zu erzielen. Dadurch kann die Flachleiteranordnung leichter umgeformt werden.

Um den oder die biegeschlaffen Leiter an dem Flachleiter bzw. dem Kunststoffmantel ohne weitere Hilfsmittel, wie etwa ein Wickelband, einen Kabelbinder oder ähnliches, zu halten, kann der Kunststoffmantel ein Deckelelement zum Abdecken der Leitungsaufnahme aufweisen. Das Deckelelement kann zum Beispiel in Querrichtung der Flachleiteranordnung schwenkbar sein. Die Schwenkachse kann beispielsweise im Randbereich einer Flachseite, einer Schmalseite, einem Übergangsbereich dazwischen oder an einem der Flachleiterschiene abgewandten Ende eines Führungsstegs angeordnet sein. Ähnlich einem Kabelschacht kann der Leiter am Kunststoffmantel durch bloßes Schließen des Deckelelements gehalten werden. Damit das Deckelelement im geschlossenen Zustand gehalten wird, kann der Kunststoffmantel an einer der Schwenkachse gegenüberliegenden Seite wenigstens ein daran ausgeformtes Gegenrastelement aufweisen, das mit wenigstens einem an dem Deckelelement ausgeformten Rastelement verrastbar ist.

Es hat sich für die Montage der Flachleiteranordnung als besonders vorteilhaft erwiesen, wenn das Deckelelement über ein mit dem Kunststoffmantel verbundenes Filmscharnier angelenkt ist. Damit ist das Deckelelement fest mit dem Kunststoffmantel verbunden oder sogar integraler Bestandteil davon. Das Deckelelement muss also nicht als separates Bauteil bereitgestellt und während der Vormontage oder im Fahrzeug montiert werden.

Um den biegeschlaffen Leiter möglichst fest an dem Kunststoffmantel zu halten, kann die Leitungsaufnahme wenigstens eine Klemmnut zum Festklemmen des Leiters aufweisen. Dies kann ggf. auch ein Deckelement oder ein anderes Halteteil ersetzen, da der Leiter klemmend an dem Kunststoffmantel gehalten wird. Damit gestaltet sich die Montage auch besonders einfach, da der biegeschlaffe Leiter einfach in die Klemmnut eingeclipst wird.

Es sind Anwendungen denkbar, in denen die Flachleiteranordnung wenigstens eine erste Flachleiterschiene mit einem ersten Kunststoffmantel sowie eine zweite Flachleiterschiene mit einem zweiten Kunststoffmantel aufweist. Dies ist beispielsweise der Fall, wenn sowohl die Stromversorgung als auch die Masserückführung durch Flachleiterschienen gebildet werden. Dabei kann die Leitungsaufnahme entweder nur an einem Kunststoffmantel ausgeformt sein oder beide Kunststoffmäntel weisen je eine oder mehrere Leitungsführungen auf. Die Kunststoffmäntel können aus demselben oder unterschiedlichen Kunststoffen gefertigt sein.

Es kann aber auch vorgesehen sein, dass ein erster Teil der Klemmnut an dem ersten Kunststoffmantel und ein dazu komplementärer, zweiter Teil der Klemmnut an dem zweiten Kunststoffmantel ausgeformt sind.

Um die Flachleiteranordnung an einem Gegenelement befestigen zu können, kann an dem Kunststoffmantel zusätzlich zur elektrischen Isolation wenigstens ein mechanisches Funktionselement mit ausgeformt sein, insbesondere als Abrasionsschutz, Fixiermittel und/oder Führungsmittel. Der Kunststoffmantel erfüllt also zumindest eine Doppelfunktion, indem er einerseits als elektrische Isolation funktioniert und andererseits gleichzeitig beispielsweise entweder nur einen Abrasionsschutz, nur ein Fixiermittel-/Führungsmittel oder beides mit ausbildet. Das Fixiermittel kann zum Beispiel der Befestigung an dem Fahrzeug oder der Befestigung mehrerer Flachleiterschienen aneinander dienen. Der Kunststoffmantel wird vorzugsweise durch Extrudieren oder Co-Extrudieren mehrerer Kunststoffkomponenten gefertigt.

Das Funktionselement lässt sich besonders einfach ausformen, wenn dieses durch wenigstens einen zumindest abschnittsweise vorstehenden Mantelfortsatz des Kunststoffmantels gebildet ist. Der Mantelfortsatz stellt im Prinzip eine Verlängerung des Kunststoffmantels über seinen übrigen Außenumriss, also einen Materialüberstand, dar. Der Mantelfortsatz kann stegförmig, laschenförmig oder mit einer ähnlichen Form ausgeformt sein. Der Mantelfortsatz kann auch weiterbearbeitet werden, zum Beispiel mittels Bohren, Prägen, Stanzen oder dergleichen, um beispielsweise Durchgangsöffnungen, Materialreduktionen, Abstands- oder Führungsrippen oder ähnliches auszuformen.

Das Funktionselement kann vorteilhafterweise auch eine zumindest abschnittsweise Materialdickenreduktion des Kunststoffmantels umfassen. Diese kann beispielsweise durch Prägen eingebracht werden. Es entstehen damit zum Beispiel Vertiefungen, wie etwa Nuten, Rippen oder Rillen, die als Führung und/oder Formschlussteil funktionieren.

Zur einfachen und robusten Fixierung an einem Gegenelement ist es vorteilhaft, wenn das Funktionselement als sich von einer Schmalseite der Flachleiterschiene, das heißt in Querrichtung der Flachleiteranordnung, weg erstreckende Fixierlasche mit wenigstens einer Durchgangsöffnung zum Fixieren an einem Gegenelement ausgebildet ist. Dabei kann das Funktionselement als eine Art Streifen über eine oder mehrere Schmalseiten der Flachleiterschiene überstehen und beispielsweise eine oder mehrere Durchgangsöffnungen aufweisen.

Alternativ oder zusätzlich dazu kann das Funktionselement als sich von einer Flachseite des Kunststoffmantels vorzugsweise in Dickenrichtung der Flachleiteranordnung bzw. der Flachleiterschiene weg erstreckende Rippe ausgebildet sein. Die Rippe kann im einfachsten Fall als Abstandshalter zum Gegenelement oder zu einer weiteren Flachleiterschiene vorgesehen sein. Darüber hinaus kann die Rippe aber auch als Führung, insbesondere als Längs- oder Querführung in Längserstreckungsrichtung oder Quererstreckungsrichtung der Flachleiterschiene, relativ zu einem Gegenelement dienen. Hierzu kann die Rippe in einen form- und/oder kraftschlüssigen Eingriff mit dem Gegenelement gebracht werden. Beispielsweise kann das Funktionselement so als Führung an einem komplementär zur Rippe ausgeformten Karosserieteil oder als Führung für eine weitere Flachleiterschiene mit komplementär ausgeformtem Kunststoffmantel dienen. Die Rippe kann sich an der Flachseite entweder in Querrichtung oder in Längsrichtung der Flachleiterschiene erstrecken.

Um neben einer Führung auch eine Fixierung in Dickenrichtung der Flachleiterschiene zu bewerkstelligen, kann die Rippe als Schwalbenschwanzführung profiliert sein, die mit einem Gegenelement oder einer Gegenführung in Eingriff bringbar ist. Das Gegenelement oder die Gegenführung können beispielsweise ein komplementär zu der Schwalbenschwanzführung ausgeformtes Karosserieteil, Halteelement oder ein weiterer Kunststoffmantel einer weiteren Flachleiterschiene sein.

Um zwei oder mehr Flachleiterschienen zueinander zu führen oder aneinander zu befestigen, ist es von Vorteil, wenn sich der Mantelfortsatz an einem Randbereich der Flachleiterschiene von deren Flachseite stegförmig weg erstreckt. Das Funktionselement kann also ein sich in Dickenrichtung der Flachleiteranordnung weg erstreckender Führungs- und/oder Haltesteg sein. Der Führungs- und/oder Haltesteg kann in Querrichtung der Flachleiteranordnung vorgespannt sein, um so beispielsweise eine weitere Flachleiterschiene oder ein Gegenelement festzuklemmen. So kann auch zwischen zwei randseitig angeordneten, stegförmigen Mantelfortsätzen eine Aufnahmemulde gebildet sein, in der eine weitere Flachleiterschiene aufgenommen und dadurch in Querrichtung relativ zum Gegenelement fixiert sowie in Längsrichtung der Flachleiterschiene entlang des Gegenelements geführt ist.

Die Erfindung bezieht sich auch auf ein Verfahren zum Herstellen einer elektrischen Flachleiteranordnung gemäß Anspruch 12.

Die Flachleiteranordnung kann eine, zwei, drei oder mehr Flachleiterschienen aufweisen. Mit dem Verfahren lassen sich insbesondere die vorstehend erläuterten Ausführungsvarianten herstellen. Die folgenden Schritte sind dabei vorgesehen:
- Zunächst wird wenigstens eine Flachleiterschiene bereitgestellt. Die Bereitstellung erfolgt vorzugsweise dadurch, dass die Flachleiterschiene aus Aluminium oder einer Aluminiumlegierung im Strangpressverfahren oder im Walzprozess hergestellt wird. Alternativ dazu kann die Bereitstellung der Flachleiterschiene auch aus einer gewalzten Kupfer bzw. Kupferlegierung erfolgen.
- Dann wird ein Kunststoffmantel auf die Flachleiterschiene zur elektrischen Isolation auf die Flachleiterschiene extrudiert. Alternativ dazu wird der Kunststoffmantel nicht auf die Flachleiterschiene extrudiert, sondern separat zu dieser. Die Flachleiterschiene kann dann an dem Kunststoffmantel befestigt werden.
- Erfindungsgemäß wird während oder nach dem Extrudieren wenigstens eine Leitungsaufnahme an dem Kunststoffmantel für zumindest einen parallel zur Flachleiterschiene geführten, biegeschlaffen Leiter ausgeformt. Das heißt, dass dem Kunststoffmantel eine Doppelfunktion zugedacht wird, nämlich als elektrische Isolation und/oder mechanischen Schutz und als Leitungsaufnahme für einen separat zu der Flachleiterschiene ausgebildeten biegeschlaffen Leiter. Die Leitungsaufnahme kann auch mit extrudiert werden.

Eine besonders vorteilhafte Weiterbildung der Erfindung sieht vor, dass das Extrudieren im Co-Extrusionsverfahren erfolgt und der Kunststoffmantel mit einer ersten Kunststoffkomponente und einer um diese angeordneten sowie dazu unterschiedlichen, zweiten Kunststoffkomponente ausgebildet wird. Die erste Kunststoffkomponente und die zweite Kunststoffkomponente unterscheiden sich vorzugsweise in ihrer Zusammensetzung, so dass eine der Kunststoffkomponenten die Flachleiterschiene elektrisch isoliert und die andere die Leitungsaufnahme ausbildet. Beispielsweise kann in einem ersten Extrusionsschritt die Flachleiterschiene mit der einen Kunststoffkomponente ummantelt werden. In einem weiteren Extrusionsschritt kann dann die andere Kunststoffkomponente mit dem gleichen oder einem weiteren Extrusionswerkzeug um die erste Kunststoffkomponente herum angeordnet werden. Die zweite Kunststoffkomponente kann beispielsweise zusätzlich als Abrasionsschutz dienen und so die mechanische Beanspruchbarkeit erhöhen.

Alternativ zur Co-Extrusion der zweiten Kunststoffkomponente kann diese auch geschäumt werden.

### Kurze Figurenbeschreibung

Nachfolgend werden nichterfindungsgemässe Beispiele und ein vorteilhaftes Ausführungsbeispiel der Erfindung unter Bezugnahme auf die begleitenden Figuren erläutert. Es zeigen:
- Figur 1: eine beispielhafte Flachleiteranordnung mit einer am Kunststoffmantel ausgeformten Leitungsaufnahme für biegeschlaffe Leiter in einer perspektivischen Vorderansicht,
- Figur 2: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 3: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 4: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 5: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 6: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 7: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 8: ein weiteres Beispiel einer Flachleiteranordnung mit einer am Kunststoffmantel ausgeformten Leitungsaufnahme für biegeschlaffe Leiter in einer perspektivischen Vorderansicht,
- Figur 9: ein weiteres Beispiel einer Flachleiteranordnung mit einer am Kunststoffmantel ausgeformten Leitungsaufnahme für Flachleiterschienen und biegeschlaffe Leiter in einer perspektivischen Vorderansicht,
- Figur 10: ein weiteres Beispiel einer Flachleiteranordnung,
- Figur 11: ein weiteres Beispiel einer Flachleiteranordnung,
- Figur 12: ein weiteres Beispiel einer Flachleiteranordnung,
- Figur 13: ein Ausführungsbeispiel einer erfindungsgemäßen Flachleiteranordnung,
- Figur 14: ein weiteres Ausführungsbeispiel einer erfindungsgemäßen Flachleiteranordnung,
- Figur 15: ein weiteres Ausführungsbeispiel einer erfindungsgemäßen Flachleiteranordnung,
- Figur 16: ein weiteres Beispiel einer Flachleiteranordnung, und
- Figur 17: ein weiteres Beispiel einer Flachleiteranordnung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

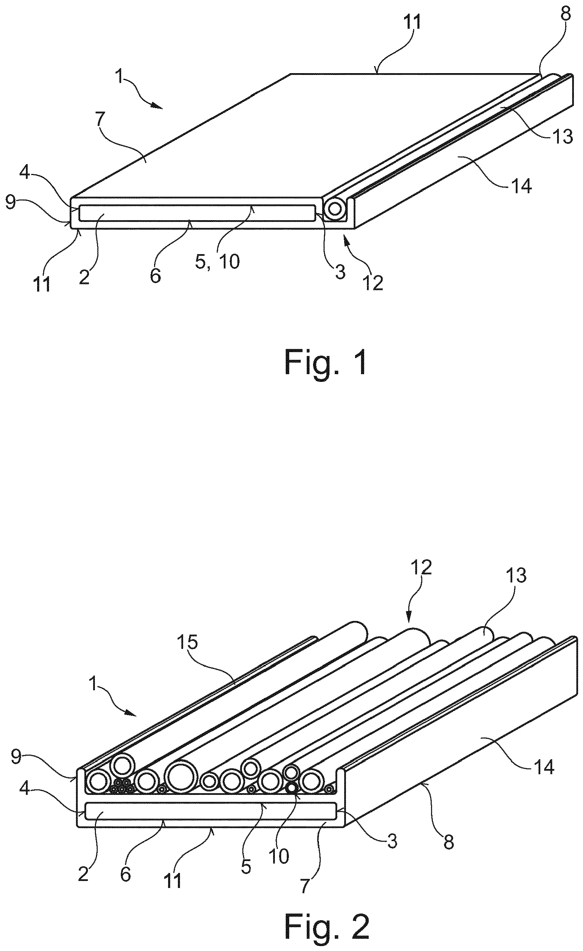

Figur 1 zeigt in einer perspektivischen Vorderansicht eine elektrische Flachleiteranordnung 1, die sich insbesondere als Stromversorgungs- oder Masseleitung in einem Fahrzeug eignet. Dort kann sie auch als Batterieleitung verwendet werden.

Die Flachleiteranordnung 1 weist hier exemplarisch genau eine formstabile Flachleiterschiene 2 mit zwei sich gegenüberliegenden Schmalseiten 3 und 4 sowie mit zwei sich gegenüberliegenden Flachseiten 5 und 6 auf. Die Flachleiterschiene 2 ist aus einem Aluminiumwerkstoff gefertigt, bei dem es sich hier um Al 99,5 handelt, und weist exemplarisch eine Stärke von 1,5 mm in Dickenrichtung bei einer Breite von 40 mm in Querrichtung auf. Die Schmalseiten 3, 4 und die Flachseiten 5, 6 der Flachleiterschiene 2 sind hier vollständig von einem Kunststoffmantel 7 aus einer ersten Kunststoffkomponente umgeben, der direkt an der Flachleiterschiene 2 anliegt. Die erste Kunststoffkomponente ist hier exemplarisch ein Polyolefin. Hier dient der Kunststoffmantel 7 primär der elektrischen Isolation der Flachleiterschiene 2. Auch der Kunststoffmantel 7 weist zwei sich gegenüberliegende Schmalseiten 8 und 9 sowie zwei sich gegenüberliegende Flachseiten 10 und 11 auf.

Aus Figur 1 geht auch hervor, dass an dem Kunststoffmantel 7 eine Leitungsaufnahme 12 mit ausgeformt ist, also einstückig bzw. integral mit dem Kunststoffmantel 7 ausgebildet ist. In der hier U-förmigen Leitungsaufnahme 12 ist exemplarisch genau einer als Rundleiter ausgeführter, biegeschlaffer elektrischer Leiter 13 parallel zu der Flachleiterschiene 2 geführt. Die Leitungsaufnahme 12 ist als (nicht näher bezeichneter) Mantelfortsatz des Kunststoffmantels 7 einstückig damit ausgebildet, wobei der Mantelfortsatz ein abschnittsweiser Materialüberstand des Kunststoffmantels 7 ist, der über den Außenumriss des übrigen Kunststoffmantels 7 übersteht. Hier steht der Mantelfortsatz an der Schmalseite 8 des Kunststoffmantels 7 in Querrichtung der Flachleiterschiene 2 über und erstreckt sich dann weiter parallel zu der Schmalseite 8, um so die U-Form der Leitungsaufnahme auszubilden. Hierzu ist eine (in Figur 1 untere, nicht näher bezeichnete) Fläche des Mantelfortsatzes plan mit einer (nicht näher bezeichneten) Außenfläche des Kunststoffmantels 7 an der Flachseite 11 ausgeführt. Des Weiteren ist parallel zu der Schmalseite 8 des Kunststoffmantels 7 ein Führungssteg 14 ausgeformt, der von der Schmalseite 8 beabstandet ist und so die Leitungsaufnahme 12 in Form einer U-förmigen Führungsnut ausbildet.

Hier sind die Führungsnut bzw. der Abstand zwischen dem Führungssteg 14 und der Schmalseite 8 so (knapp) bemessen, dass neben einer Führungswirkung auch eine Klemmwirkung erreicht wird. Somit bildet die Leitungsaufnahme 12 auch eine (hier nicht näher bezeichnete) Klemmnut mit aus. Damit ist der Leiter 13 in der Leitungsaufnahme 12 eingeklemmt, wobei der Leiter 13 darin einfach eingeclipst wird. Zwar ist der Mantelfortsatz zur Bildung der Leitungsaufnahme 12 hier nur an der Schmalseite 8 des Kunststoffmantels 7 ausgeformt, allerdings kann dieser auch beidseitig, also an der Schmalseite 9 und der Schmalseite 8, ausgeformt sein, so dass beidseitig je ein oder mehrere Leiter 13 geführt und ggf. auch gehalten werden können.

Ein weiteres Beispiel ist in Figur 2 in einer perspektivischen Vorderansicht gezeigt. Bei der dargestellten Flachleiteranordnung 1 ist die Leitungsaufnahme 12 durch den ersten Führungssteg 14 und einen damit zusammenwirkenden, zweiten Führungssteg 15 gebildet. Die Führungsstege 14, 15 sind jeweils durch einen Mantelfortsatz der Schmalseiten 8 bzw. 9 über die Flachseite 10 hinaus ausgebildet. Damit ist die Leitungsaufnahme 12 durch die Flachseite 10 sowie die Führungsstege 14, 15 des Kunststoffmantels 7 gebildet. Darin ist eine Mehrzahl von Leitern 13 geführt, die teilweise nebeneinander und teilweise auch aufeinander liegen.

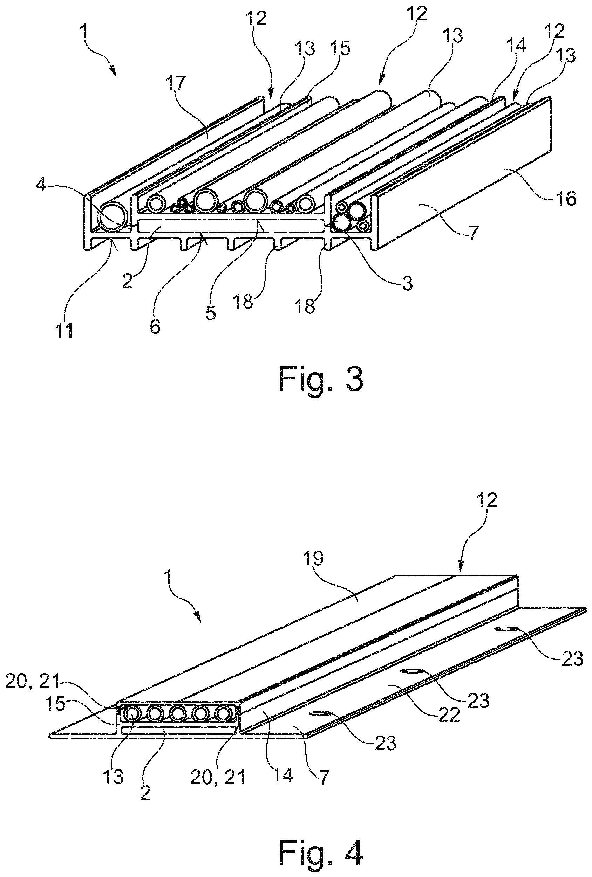

Bei dem in Figur 3 in einer perspektivischen Vorderansicht gezeigten Beispiel der Flachleiteranordnung 1 weist der Kunststoffmantel 7 zusätzlich einen als Mantelfortsatz ausgebildeten, dritten Führungssteg 16, der in Querrichtung beabstandet zu dem ersten Führungssteg 14 parallel dazu angeordnet ist, und einen als Mantelfortsatz ausgebildeten, vierten Führungssteg 17 auf, der in Querrichtung beabstandet zu dem zweiten Führungssteg 15 parallel dazu angeordnet ist. Zwischen jedem Paar von Führungsstegen 14 und 16 bzw. 15 und 17 ist damit wiederum jeweils eine U-Förmige Leitungsaufnahme 12 in Form einer Führungsnut ausgebildet, so dass die Leiter 13 in drei zueinander separaten Leitungsführungen 12 geführt sind. Außerdem geht aus Figur 3 hervor, dass an der Flachseite 11, also der Leitungsaufnahme 12 gegenüberliegend, mehrere Abstandsstege 18 ebenfalls als Mantelfortsatz des Kunststoffmantels 7 ausgeformt sind. Auf diese Weise dient der Kunststoffmantel 7 auch als Abstandshalter zu einem (nicht gezeigten) Gegenelement, wie etwa einem Karosserieteil, einer Fahrzeugkomponente oder einer weiteren Flachleiteranordnung.

In Figur 4 ist in einer perspektivischen Vorderansicht ein weiteres Beispiel der Flachleiteranordnung 1 gezeigt, bei dem der Kunststoffmantel 7 ergänzend mit einem Deckelelement 19 zusammenwirkt, das die Leitungsaufnahme 12 im geschlossenen Zustand abdeckt. Das Deckelelement 19 ist hier exemplarisch separat zu dem Kunststoffmantel 7 ausgebildet und verfügt über ein Rastelement 20 in Form einer Rastnase, das beidseitig ausgeformt ist, um mit jeweils einem Gegenrastelement 21 des Kunststoffmantels 7 zusammenzuwirken, das am Mantelfortsatz der Schmalseiten 8, 9 ausgeformt ist. Insbesondere ist das Gegenrastelement 21 an den dortigen Führungsstegen 14, 15 einstückig damit ausgeformt.

Zusätzlich steht bei dem in Figur 4 gezeigten Beispiel der Mantelfortsatz auch in Querrichtung der Flachleiterschiene 2 über. Eine (in Figur 4 untere) Fläche dieses Mantelfortsatzes ist plan mit einer Fläche des Kunststoffmantels 7 an der Flachseite 11 ausgeführt. Zwar ist der Mantelfortsatz an beiden Schmalseiten 8, 9 ausgebildet, allerdings kann dieser auch nur einseitig ausgeformt sein. Dieser Mantelfortsatz ist hier jeweils als Fixierlasche 22 ausgebildet und weist mehrere Durchgangsöffnungen 23 auf, die zur Befestigung an einem (nicht gezeigten) Gegenelement vorgesehen sind. Der Kunststoffmantel 7 dient somit auch zur Befestigung an einem Gegenelement, so dass die Flachleiterschiene 2 sowie die Leiter 13 über den Kunststoffmantel 7 daran befestigt sind.

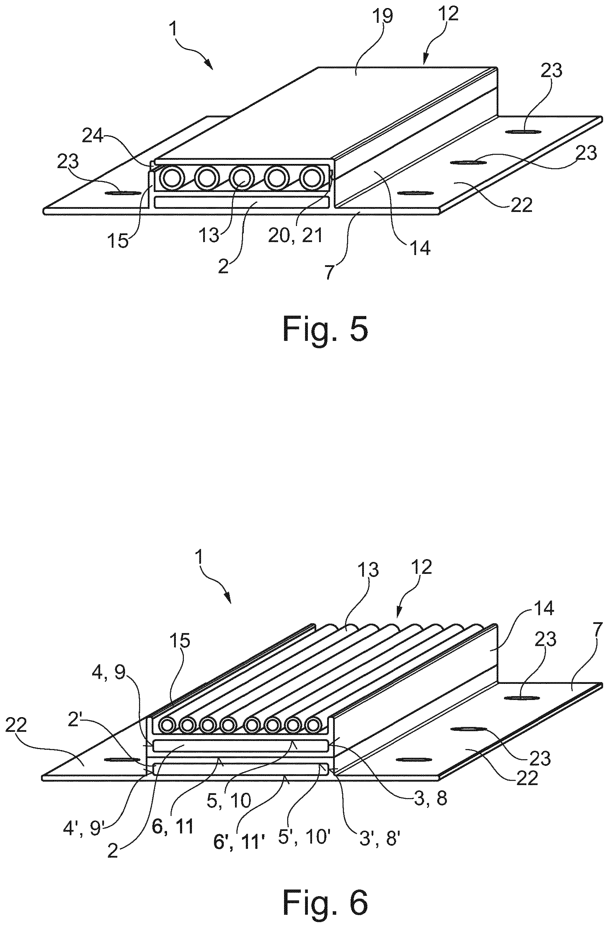

In Figur 5 ist das Deckelelement 19 über ein Scharnier 24 angelenkt, das hier als Filmscharnier ausgebildet ist. Das Scharnier 24 verbindet das Deckelelement 19 an dem Führungssteg 14 an der Schmalseite 8, wobei sich das Deckelelement 19 wiederum über das Rastelement 20 an dem Gegenrastelement 21 verrasten lässt. Lediglich exemplarisch sind bei dem in Figur 5 gezeigten Beispiel wiederum die Fixierlaschen 22 mit ausgebildet, um den Kunststoffmantel an einem Gegenelement befestigen zu können.

Das in Figur 6 gezeigte Beispiel unterscheidet sich von den vorstehenden dadurch, dass in Dickenrichtung der Flachleiteranordnung 1 benachbart zu der (ersten) Flachleiterschiene 2 eine weitere, zweite Flachleiterschiene 2' angeordnet ist. Hier weist die Flachleiteranordnung 1 also zwei Flachleiterschienen 2, 2' auf, wobei die eine Flachleiterschiene 2 als stromführende Versorgungsleitung und die andere Flachleiterschiene 2' als Masseleitung, oder umgekehrt, vorgesehen sind.

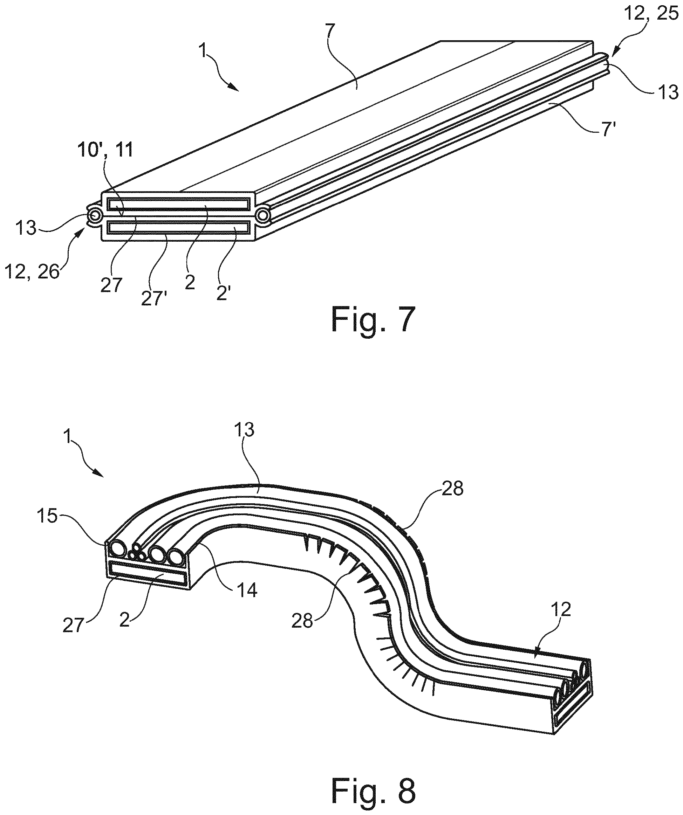

In Figur 7 ist ein Beispiel dargestellt, bei dem die zweite Flachleiterschiene 2' zu der ersten Flachleiterschiene 2 mit dem (ersten) Kunststoffmantel 7 in Dickenrichtung lagig angeordnet ist und mit einem zweiten Kunststoffmantel 7' ummantelt ist. Beide Kunststoffmäntel 7, 7' sind aus derselben, ersten Kunststoffkomponente gefertigt. Es ist erkennbar, dass jeder Kunststoffmantel 7, 7' einen Mantelfortsatz aufweist, die gemeinsam eine erste Klemmnut 25 und eine zweite Klemmnut 26 zum Einklemmen von jeweils einem Leiter 13 ausbilden. Ein erster Teil der Klemmnuten 25, 26 ist also durch den Kunststoffmantel 7 und ein dazu komplementär ausgeformter, zweiter Teil der Klemmnuten 25, 26 ist also durch den Kunststoffmantel 7' ausgeformt. Der zweite Kunststoffmantel 7' liegt auf der Flachseite 11 des ersten Kunststoffmantels 7 auf und ist beispielsweise mit diesem verklebt oder umwickelt, um die beiden Teile der jeweiligen Klemmnut 25, 26 zueinander zu fixieren.

Aus Figur 7 geht auch hervor, dass die erste und die zweite Flachleiterscheine 2, 2' zusätzlich jeweils mit einer zweiten Kunststoffkomponente 27, 27' ummantelt sind. Diese zweite Kunststoffkomponente 27, 27' ist unterschiedlich zu der ersten Kunststoffkomponente, des hier äußeren Kunststoffmantels 7, 7'. Die zweite Kunststoffkomponente 27, 27' ist also zwischen der jeweiligen Flachleiterschiene 2, 2' und dem jeweiligen Kunststoffmantel 7, 7' angeordnet. Hier erfüllt die zweite Kunststoffkomponente 27, 27' primär die Funktion der elektrischen Isolation, während die Kunststoffmäntel 7, 7' primär als mechanischer Schutz und zum Ausbilden der Klemmnuten 25, 26 vorgesehen sind.

Bei dem in Figur 8 dargestellten Beispiel sind die Flachleiterschiene 2, der Kunststoffmantel 7 und die zweite Kunststoffkomponente 27 um wenigstens zwei unterschiedliche (nicht näher bezeichnete) Biegeachsen räumlich geformt. Für eine bessere Umformbarkeit ist der Kunststoffmantel 7 quergeschlitzt, was beispielsweise durch ein Trennverfahren, wie etwa Schneiden, erfolgt. Dadurch weist der Kunststoffmantel 7 eine Mehrzahl von Querschlitzen 28 auf, die in einem konvex gebogenen Bereich des Kunststoffmantels 7 infolge des Umformens aufgespreizt sind, wodurch die Querschlitze die Umformbarkeit der Flachleiteranordnung 1 begünstigen.

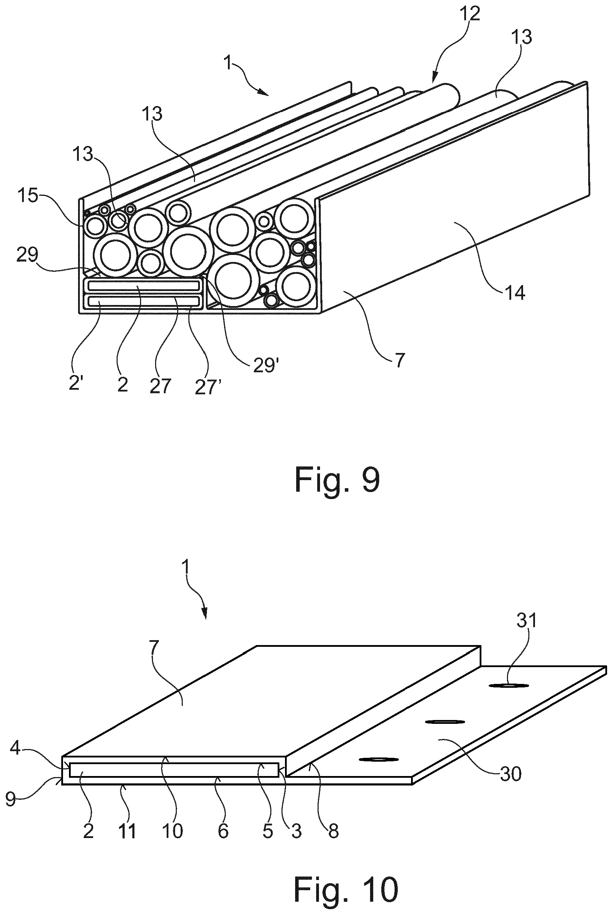

In Figur 9 ist ein weiteres Beispiel dargestellt, bei dem die Flachleiterschienen 2, 2' mit der zweiten Kunststoffkomponente 27, 27' ummantelt sind. Im Unterschied zu den vorstehenden Ausführungsbeispielen sind die Flachleiterschienen 2, 2' mitsamt den Kunststoffkomponenten 27, 27'hier nicht integral mit dem Kunststoffmantel 7 ausgeführt, sondern separat dazu. Die Flachleiterschienen 2, 2' sind in einer an dem Kunststoffmantel 7 ausgeformten Schienenaufnahme zueinander lagig angeordnet und werden dort durch eine Rasteinrichtung 29 gehalten. Die Rasteinrichtung 29 ist hier als integral mit dem Kunststoffmantel 7 ausgeformter Rasthaken ausgeführt. Weiterhin dient der Kunststoffmantel 7 mit Hilfe der seitlich angeordneten Führungsstege 14, 15 als Leitungsaufnahme 12 der Leiter 13.

Ausgehend von dem beschriebenen Ausführungsbeispiel kann die Erfindung in vielerlei Hinsicht abgewandelt werden.

So geht aus Figur 10 z.B. hervor, dass an dem Kunststoffmantel 7 auch ein mechanisches Funktionselement 30 mit ausgeformt ist, also einstückig mit dem Kunststoffmantel 7 ausgebildet ist. Lediglich zur besseren Übersichtlichkeit ist die Leitungsaufnahme 12 hier nicht explizit gezeigt. Das Funktionselement 30 ist ebenfalls als Mantelfortsatz des Kunststoffmantels 7 einstückig damit ausgebildet, wobei der Mantelfortsatz exemplarisch ein abschnittsweiser Materialüberstand des Kunststoffmantels 7 ist, der über den übrigen Außenumriss des Kunststoffmantels 7 übersteht. Hier steht der Mantelfortsatz an der Schmalseite 4 in Querrichtung der Flachleiterschiene 2 bzw. der Flachleiteranordnung 1 über. Eine (in Figur 10 untere) Fläche des Mantelfortsatzes ist plan mit einer (in Figur 10 unteren) Fläche an der Flachseite 11 des Kunststoffmantels 7 ausgeführt. Zwar ist der Mantelfortsatz hier nur an der Schmalseite 8 des Kunststoffmantels 7 ausgeformt, allerdings kann dieser auch beidseitig, also an der Schmalseite 8 und der Schmalseite 9, ausgeformt sein. Das Funktionselement 30 ist hier als Fixierlasche ausgebildet und weist mehrere Durchgangsöffnungen 31 auf, die zur zum Beispiel schraubenden Befestigung an einem (nicht gezeigten) Gegenelement vorgesehen sind. Der Kunststoffmantel 7 dient somit neben der elektrischen Isolation der Flachleiterschiene 2 auch zu deren Befestigung an einem Gegenelement.

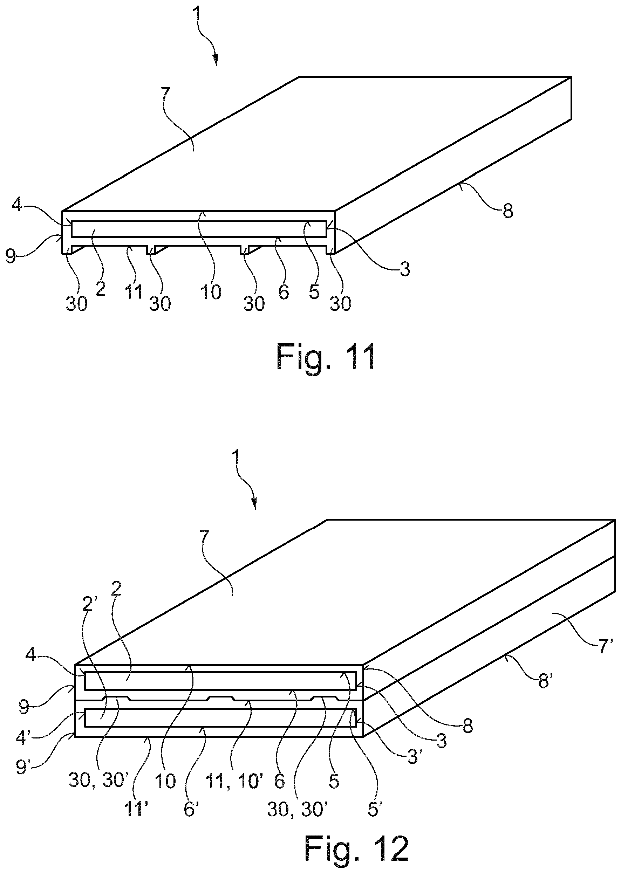

In Figur 11 ist ein weiteres Beispiel der Flachleiteranordnung 1 in einer perspektivischen Vorderansicht dargestellt. Zunächst ist erkennbar, dass am Kunststoffmantel 7 auch mehrere gleiche Funktionselemente 30 mit ausgeformt sein können. Hier sind die Funktionselemente 30 wiederum jeweils als Mantelfortsatz ausgebildet. Die Funktionselemente 30 stehen im Randbereich der Flachseite 8 in Dickenrichtung der Flachleiteranordnung 1 stegförmig über den Kunststoffmantel 7 hervor. Die randseitigen Funktionselemente 30 sind hier bündig mit den Schmalseiten 8 und 9 ausgeformt. Dazwischen sind weitere Funktionselemente 30 ebenfalls stegförmig ausgeformt. Damit dient der Kunststoffmantel 7 hier neben der elektrischen Isolation auch als Abstandshalter zu einem Gegenelement, zum Beispiel einem Karosserieteil. Selbstverständlich können auch mehrere Funktionselemente 30 mit ausgeformt sein, zum Beispiel auch als Abstandshalter zwischen den Randbereichen durch eine oder mehrere stegförmige Mantelfortsätze.

Die in Figur 12 gezeigte Flachleiteranordnung 1 weist die erste Flachleiterschiene 2 und die zweite Flachleiterschiene 2' auf, wobei die beiden Flachleiterschienen 2, 2' zueinander lagig angeordnet sind. Es ist zu erkennen, dass der zweite Kunststoffmantel 7' das Funktionselement 30 in Form von Rippen aufweist, die in Dickenrichtung der zweiten Flachleiterschiene 2' über die Flachseite 6' hervorstehen und sich entlang der Längsrichtung der Flachleiterschiene 2' erstrecken. Der erste Kunststoffmantel 7 ist komplementär zum zweiten Kunststoffmantel 7' ausgeformt, indem dort als (weiteres) Funktionselement 30' Vertiefungen eingeprägt sind, die in Position, Form und Größe an die Funktionselemente 30 des zweiten Kunststoffmantels 7' angepasst sind. Über die Funktionselemente 30, 30' sind somit die beiden Flachleiterschienen 2, 2' relativ zueinander geführt und können insbesondere in deren Querrichtung nicht verrutschen.

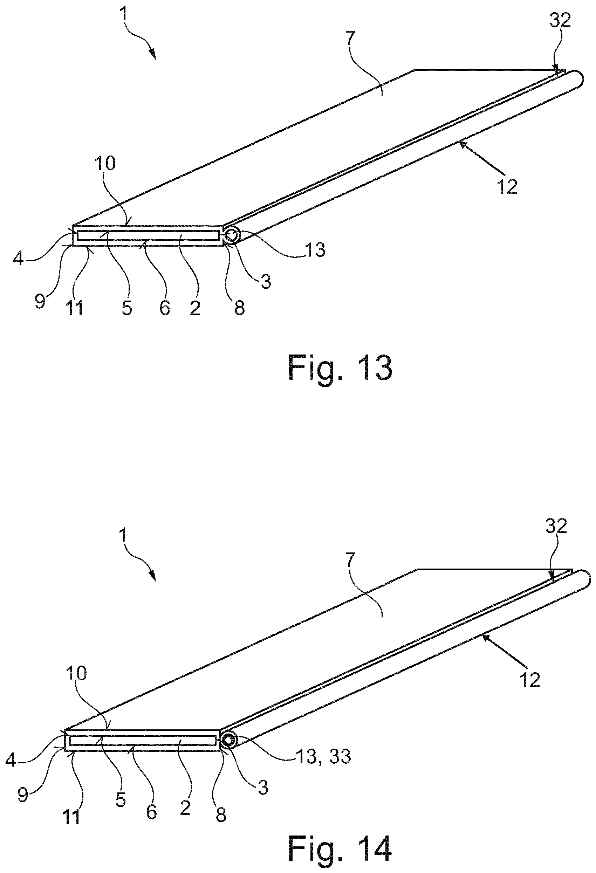

In Figur 13 ist ein Ausführungsbeispiel der Erfindung gezeigt. Dabei ist von dem Kunststoffmantel 7 auch der biegeschlaffer Leiter 13 mit ummantelt, so dass in dem einstückig ausgebildeten Kunststoffmantel 7 bzw. der Leitungsaufnahme 12 die Flachleiterschiene 2 und der Leiter 13 gemeinsam aufgenommen sind. Der Leiter 13 ist in einem Mantelfortsatz des Kunststoffmantels 7 aufgenommen, wobei der Mantelfortsatz ein abschnittsweiser Materialüberstand des Kunststoffmantels 7 ist, der über den übrigen Außenumriss des Kunststoffmantels 7 übersteht. Hier steht der Mantelfortsatz an der Schmalseite 8 in Querrichtung der Flachleiterschiene 2 bzw. der Flachleiteranordnung 1 über, so dass der Leiter 13 parallel und benachbart zu der Schmalseite 8 geführt ist. Bei dem Leiter 13 handelt es sich exemplarisch um einen elektrischen Leiter, der keine separate elektrische Isolation aufweist, sondern dieselbe gemeinsame Isolation wie die Flachleiterschiene aufweist.

Der Mantelfortsatz des Kunststoffmantels 7 weist eine Schneidnut 32 auf, die hier als Materialdickenreduktion in Dickenrichtung der Flachleiteranordnung 1 ausgeführt ist. Die Schneidnut 32 erstreckt sich also von jeder der Flachseiten 10, 11 jeweils in Dickenrichtung der Flachleiteranordnung 1. Damit ist die Schneidnut 32 zwischen einem die Flachleiterschiene 2 aufnehmenden Teil des Kunststoffmantels 7 und einem den Leiter 13 aufnehmenden Teil des Mantelfortsatzes des Kunststoffmantels 7 ausgebildet. Durch die Schneidnut 32 lässt sich der den Leiter 13 aufnehmende Teil des Kunststoffmantels 7 z.B. zum Kontaktieren eines (nicht gezeigten) Gegenelements von dem die Flachleiterschiene 2 aufnehmenden Teil des Kunststoffmantels 7 abschnittsweise abtrennen.

Das in Figur 14 dargestellte Ausführungsbeispiel weicht dahingehend von dem vorstehenden ab, dass der Leiter 13 hier zusätzlich eine eigene elektrische Isolation 33 aufweist, die zwischen dem Leiter 13 und dem Kunststoffmantel 7 angeordnet ist.

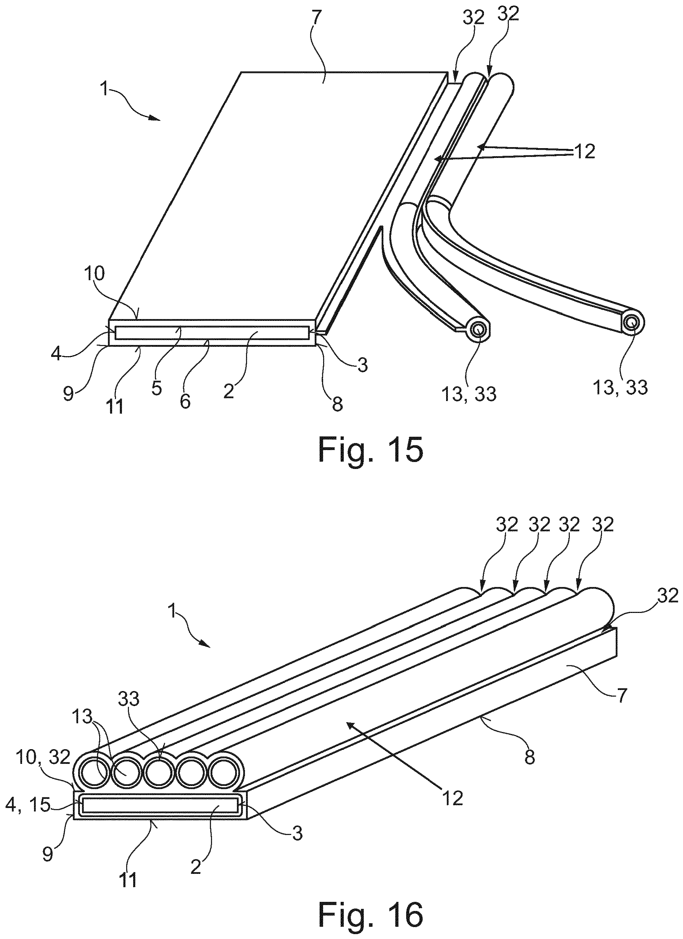

Bei dem in Figur 15 dargestellten Ausführungsbeispiel sind mehrere Leiter 13 parallel zu der Flachleiterschiene 2 geführt, wobei die Leiter 13 hier exemplarisch auf einer gemeinsamen Seite, nämlich der Schmalseite 8 des Kunststoffmantels 7 angeordnet und parallel zur Flachleiterschiene 2 geführt sind. Zwischen der Flachleiterschiene 2 und dem einen Leiter 13 sowie zwischen dem einen Leiter 13 und dem weiteren Leiter 13 ist jeweils eine Schneidnut 32 eingebracht, um die die Leiter 13 aufnehmenden Teile des Mantelfortsatzes des Kunststoffmantels 7 ggf. abschnittsweise abtrennen zu können, wie dies in Figur 15 anschaulich angedeutet ist.

Bei dem in Figur 16 gezeigten Beispiel sind wiederum mehrere Leiter 13 nebeneinander gereiht, wobei die Reihe der Leiter 13 lagig zu der Flachleiterschiene 2 angeordnet ist. Damit überlagern sich die Leiter 13 und die Flachleiterschiene 2 in Dickenrichtung der Flachleiteranordnung 1. Hier sind die Leiter 13 demnach benachbart zu der Flachseite 10 des Kunststoffmantels 7 angeordnet und parallel zu dieser geführt. Dabei sind die Leiter 13 wiederum in einem Mantelfortsatz des Kunststoffmantels 7 mit aufgenommen. Diese lagige Anordnung wirkt sich besonders vorteilhaft auf die elektromagnetische Verträglichkeit der Flachleiteranordnung 1 aus.

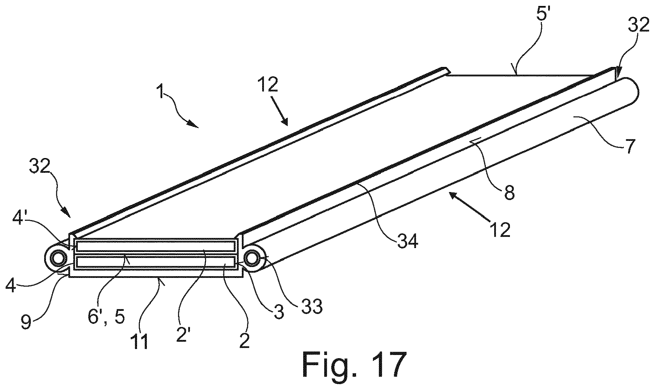

In Figur 17 ist der Kunststoffmantel 7 der Flachleiteranordnung 1 derart ausgebildet, dass (hier exemplarisch) zwei lagig angeordnete Flachleiterschienen 2, 2' eingeclipst werden können. Selbstverständlich können auch nur eine Flachleiterschiene 2 oder auch mehrere Flachleiterschienen 2, 2', 2" usw. vorgesehen sein. Hierzu ist der Kunststoffmantel 7 U-förmig ausgebildet, also ohne die Flachseite 10. Der Mantelfortsatz des Kunststoffmantels 7 weist an beiden Schmalseiten 8, 9 jeweils eine daran angeformte Rasteinrichtung 34 in Form von Rasthaken auf. Es ist erkennbar, dass die Flachleiterschienen 2, 2' an ihren Schmalseiten 3, 4 bzw. 3', 4' und zusätzlich die (in Figur 17 obere) Flachleiterschiene 2' auch an deren Flachseite 5' umgriffen werden.

Ein Verfahren zur Herstellung der Flachleiteranordnung 1 kann wie nachfolgend beschrieben ablaufen.

Zunächst wird die Flachleiterschiene 2 bereitgestellt, was zum Beispiel durch Strangpressen oder durch Walzen des Aluminiumwerkstoffs erfolgt. Danach wird der Kunststoffmantel 7 aus der ersten Kunststoffkomponente um die Flachleiterschiene 2 herum extrudiert. Wie in Figur 9 dargestellt, ist es alternativ dazu auch möglich, den Kunststoffmantel 7 separat zu extrudieren und diesen dann bereitzustellen, um die Flachleiterschiene 2 darin anzuordnen und zum Beispiel daran zu verrasten. Gleichzeitig mit dem Extrudieren des Kunststoffmantels erfolgt ein Ausformen der Leitungsaufnahme 12 für den Leiter 13, die somit integraler Bestandteil des Kunststoffmantels 7 ist.

Für einige der vorstehenden Ausführungsbeispiele ist es aber auch möglich, den Kunststoffmantel 7 zu co-extrudieren, um den Kunststoffmantel 7 aus der ersten Kunststoffkomponente und zusätzlich die zweite Kunststoffkomponente 27 auf die Flachleiterschiene 2 aufzubringen. Das Co-Extrudieren erfolgt entweder im gleichen oder in einem weiteren Extrusionswerkzeug wie das Extrudieren des Kunststoffmantels.

Ausgehend von den dargestellten Ausführungsbeispielen können die Flachleiteranordnung 1 oder das Herstellungsverfahren dafür in vielerlei Hinsicht abgewandelt werden. So ist es beispielsweise möglich, dass an dem Kunststoffmantel ein Abrasionsschutz mit ausgeformt wird, wofür die erste Kunststoffkomponente eine vergleichsweise höhere Härte aufweisen sollte. Wenn der Kunststoffmantel 7 separat bereitgestellt wird, kann auch die zweite Flachleiterschiene 2' daran verrastet werden.

### BEZUGSZEICHENLISTE

- 1: Flachleiteranordnung
- 2, 2': Flachleiterschiene
- 3, 3': Schmalseite der Flachleiterschiene
- 4, 4': Schmalseite der Flachleiterschiene
- 5, 5': Flachseite der Flachleiterschiene
- 6, 6': Flachseite der Flachleiterschiene
- 7, 7': Kunststoffmantel
- 8, 8': Schmalseite des Kunststoffmantels
- 9, 9': Schmalseite des Kunststoffmantels
- 10, 10': Flachseite des Kunststoffmantels
- 11, 11': Flachseite des Kunststoffmantels
- 12: Leitungsaufnahme(n)
- 13: Leiter (z.B. elektrische Leitung, Kabel, Lichtwellenleiter etc.)
- 14-17: Führungssteg(e)
- 18: Abstandssteg(e)
- 19: Deckelelement
- 20: Rastelement(e)
- 21: Gegenrastelement(e)
- 22: Fixierlasche(n)
- 23: Durchgangsöffnung(en)
- 24: Scharnier
- 25: erste Klemmnut
- 26: zweite Klemmnut
- 27, 27': zweite Kunststoffkomponente
- 28: Querschlitz(e)
- 29: Rasteinrichtung
- 30: mechanisches Funktionselement
- 31: Durchgangsöffnung
- 32: Schneidnut
- 33: Zusätzliche Isolation
- 34: Rasteinrichtung

## Patentansprüche

1. Elektrische Flachleiteranordnung (1) für ein Fahrzeug, mit wenigstens einer im Wesentlichen formstabilen oder biegesteifen Flachleiterschiene (2, 2'), die zumindest abschnittsweise mit einem Kunststoffmantel (7, 7') ummantelt ist,
dass an dem Kunststoffmantel (7, 7') wenigstens eine Leitungsaufnahme (12) zum Aufnehmen von wenigstens einem zumindest abschnittsweise parallel zur Flachleiterschiene (2, 2') geführten, biegeschlaffen Leiter (13) mit ausgeformt ist,
**dadurch gekennzeichnet,**
**dass** der Kunststoffmantel (7, 7') zumindest abschnittsweise eine Schneidnut (32) zum abschnittsweisen Abtrennen eines den Leiter (13) aufnehmenden Teils von einem die Flachleiterschiene (2, 2') aufnehmenden Teils aufweist oder dass der Kunststoffmantel (7, 7') zumindest abschnittsweise eine Sollbruchstelle zwischen einem die Flachleiterschiene (2, 2') aufnehmenden Teil und einem den Leiter (13) aufnehmenden Teil aufweist.

2. Flachleiteranordnung (1) nach Anspruch 1, **dadurch gekennzeichnet, dass** die Leitungsaufnahme (12) durch wenigstens einen Mantelfortsatz des Kunststoffmantels (7, 7') einstückig damit ausgebildet ist.

3. Flachleiteranordnung (1) nach Anspruch 1 oder 2, **dadurch gekennzeichnet, dass** die Leitungsaufnahme (12) schachtförmig mit wenigstens einem seitlichen Führungssteg (14-17) ausgebildet ist, der parallel sowie beabstandet zu einer Schmalseite (3, 3', 4, 4') der Flachleiterschiene (2, 2') angeordnet ist.

4. Flachleiteranordnung (1) nach einem der vorhergehenden Ansprüche, **dadurch gekennzeichnet, dass** die Leitungsaufnahme (12) mit einem Deckelelement (19) abdeckbar oder abgedeckt ist.

5. Flachleiteranordnung (1) nach einem der vorhergehenden Ansprüche, **dadurch gekennzeichnet, dass** die Leitungsaufnahme (12) wenigstens eine Klemmnut (25, 26) zum Festklemmen des Leiters (13) aufweist.

6. Flachleiteranordnung (1) nach einem der vorhergehenden Ansprüche, **dadurch gekennzeichnet, dass** der Kunststoffmantel (7, 7') aus einer ersten Kunststoffkomponente gefertigt ist und zwischen der Flachleiterschiene (2, 2') und dem Kunststoffmantel (7, 7') eine zweite Kunststoffkomponente (27, 27') angeordnet ist.

7. Flachleiteranordnung (1) nach einem der vorhergehenden Ansprüche, **dadurch gekennzeichnet, dass** an dem Kunststoffmantel (7, 7') zusätzlich wenigstens ein mechanisches Funktionselement (30, 30') mit ausgeformt ist.

8. Flachleiteranordnung (1) nach Anspruch 7, **dadurch gekennzeichnet, dass** das Funktionselement (30, 30') durch wenigstens einen zumindest abschnittsweise vorstehenden Mantelfortsatz des Kunststoffmantels (7, 7') einstückig damit gebildet ist.

9. Flachleiteranordnung (1) nach einem der Ansprüche 7 bis 8, **dadurch gekennzeichnet, dass** das Funktionselement (30, 30') eine sich von einer Schmalseite (8, 8'; 9, 9') des Kunststoffmantels (7, 7') weg erstreckende Fixierlasche mit wenigstens einer Durchgangsöffnung (31) zum Fixieren an einem Gegenelement ist.

10. Flachleiteranordnung (1) nach einem der Ansprüche 7 bis 9, **dadurch gekennzeichnet, dass** das Funktionselement (30, 30') eine sich von einer Flachseite (10, 10'; 11, 11') des Kunststoffmantels (7, 7') weg erstreckende Rippe ist.

11. Flachleiteranordnung (1) nach einem der Ansprüche 7 bis 10, **dadurch gekennzeichnet, dass** das Funktionselement (30, 30') ein sich in Dickenrichtung der Flachleiteranordnung (1) weg erstreckender Führungs- und/oder Haltesteg ist.

12. Verfahren zum Herstellen einer elektrischen Flachleiteranordnung (1) nach einem der Ansprüche 1 bis 11, mit den Schritten:
- Bereitstellen von wenigstens einer Flachleiterschiene (2, 2'), und
- Extrudieren eines Kunststoffmantels (7, 7') um die Flachleiterschiene (2, 2') oder Bereitstellen des separat dazu extrudierten Kunststoffmantels (7, 7'),
**gekennzeichnet durch**
Ausformen von wenigstens einer Leitungsaufnahme (12) an dem Kunststoffmantel (7, 7') für wenigstens einen zumindest abschnittsweise parallel zur Flachleiterschiene (2, 2') geführten, biegeschlaffen Leiter (13),
wobei der Kunststoffmantel (7, 7') zumindest abschnittsweise eine Schneidnut (32) zum abschnittsweisen Abtrennen eines den Leiter (13) aufnehmenden Teils von einem die Flachleiterschiene (2, 2') aufnehmenden Teils aufweist oder dass der Kunststoffmantel (7, 7') zumindest abschnittsweise eine Sollbruchstelle zwischen einem die Flachleiterschiene (2, 2') aufnehmenden Teil und einem den Leiter (13) aufnehmenden Teil aufweist.

13. Verfahren nach Anspruch 12, **dadurch gekennzeichnet, dass** die Leitungsaufnahme (12) gleichzeitig mit dem Kunststoffmantel (7, 7') extrudiert wird.

14. Verfahren nach Anspruch 12 oder 13, **dadurch gekennzeichnet, dass** der Kunststoffmantel (7, 7') aus einer ersten Kunststoffkomponente sowie einer dazu unterschiedlichen, zweiten Kunststoffkomponente (27, 27') co-extrudiert wird.

## Claims

1. Electrical flat-conductor arrangement (1) for a vehicle, having at least one substantially dimensionally stable or flexurally rigid flat-conductor rail (2, 2'), which is sheathed at least in certain portions with a plastics sheath (7, 7'),
in that at least one line receptacle (12) for receiving at least one flexurally rigid conductor (13), guided parallel to the flat-conductor rail (2, 2') at least in certain portions, is also shaped on the plastics sheath (7, 7'),
**characterized in that**
the plastics sheath (7, 7'), at least in certain portions, has a cutting groove (32) for separating, at least in certain portions, a part receiving the conductor (13) from a part receiving the flat-conductor rail (2, 2'), or **in that** the plastics sheath (7, 7'), at least in certain portions, has a predetermined breaking point between a part receiving the flat-conductor rail (2, 2') and a part receiving the conductor (13).

2. Flat-conductor arrangement (1) according to Claim 1, **characterized in that** the line receptacle (12) is formed in one piece with the plastics sheath (7, 7') by way of at least one sheath projection of the latter.

3. Flat-conductor arrangement (1) according to Claim 1 or 2, **characterized in that** the line receptacle (12) is in the form of a duct with at least one lateral guide web (14-17), which is arranged parallel to and spaced apart from a narrow side (3, 3', 4, 4') of the flat-conductor rail (2, 2').

4. Flat-conductor arrangement (1) according to one of the preceding claims, **characterized in that** the line receptacle (12) can be or is covered by a covering element (19) .

5. Flat-conductor arrangement (1) according to one of the preceding claims, **characterized in that** the line receptacle (12) has at least one clamping groove (25, 26) for clamping the line (13) in place.

6. Flat-conductor arrangement (1) according to one of the preceding claims, **characterized in that** the plastics sheath (7, 7') is manufactured from a first plastics component, and a second plastics component (27, 27') is arranged between the flat-conductor rail (2, 2') and the plastics sheath (7, 7').

7. Flat-conductor arrangement (1) according to one of the preceding claims, **characterized in that,** in addition, at least one mechanical functional element (30, 30') is also shaped on the plastics sheath (7, 7').

8. Flat-conductor arrangement (1) according to Claim 7, **characterized in that** the functional element (30, 30') is formed in one piece with the plastics sheath (7, 7') by way of at least one sheath projection, which projects at least in certain portions, of the latter.

9. Flat-conductor arrangement (1) according to either of Claims 7 and 8, **characterized in that** the functional element (30, 30') is a fixing tab, which extends away from a narrow side (8, 8'; 9, 9') of the plastics sheath (7, 7') and has at least one through-opening (31) for fixing to a mating element.

10. Flat-conductor arrangement (1) according to one of Claims 7 to 9, **characterized in that** the functional element (30, 30') is a rib, which extends away from a flat side (10, 10'; 11, 11') of the plastics sheath (7, 7').

11. Flat-conductor arrangement (1) according to one of Claims 7 to 10, **characterized in that** the functional element (30, 30') is a guide web and/or holding web which extends away in the thickness direction of the flat-conductor arrangement (1).

12. Method for producing an electrical flat-conductor arrangement according to one of Claims 1 to 11, having the following steps:
- providing at least one flat-conductor rail (2, 2'), and
- extruding a plastics sheath (7, 7') around the flat-conductor rail (2, 2') or providing the plastics sheath (7, 7') extruded separately,
**characterized by**
shaping at least one line receptacle (12) on the plastics sheath (7, 7') for at least one flexurally rigid conductor (13) guided parallel to the flat-conductor rail (2, 2') at least in certain portions,
wherein the plastics sheath (7, 7'), at least in certain portions, has a cutting groove (32) for separating, at least in certain portions, a part receiving the conductor (13) from a part receiving the flat-conductor rail (2, 2'), or in that the plastics sheath (7, 7'), at least in certain portions, has a predetermined breaking point between a part receiving the flat-conductor rail (2, 2') and a part receiving the conductor (13).

13. Method according to Claim 12, **characterized in that** the line receptacle (12) is extruded at the same time as the plastics sheath (7, 7').

14. Method according to Claim 12 or 13, **characterized in that** the plastics sheath (7, 7') is co-extruded from a first plastics component and a different, second plastics component (27, 27').

## Revendications

1. Agencement de conducteur plat électrique (1) pour un véhicule, avec au moins un rail de conducteur plat (2, 2') essentiellement indéformable ou rigide en flexion, qui est enveloppé au moins par sections par une enveloppe en matière plastique (7, 7'),
en ce que sur l'enveloppe en matière plastique (7, 7') est formée au moins un logement de conducteur (12) pour recevoir au moins un conducteur (13) souple en flexion, guidé au moins par sections parallèlement au rail de conducteur plat (2, 2'),
**caractérisé en ce que**
l'enveloppe en matière plastique (7, 7') présente au moins par sections une rainure de coupe (32) pour séparer par sections une partie recevant le conducteur (13) d'une partie recevant le rail de conducteur plat (2, 2') ou **en ce que** l'enveloppe en matière plastique (7, 7') présente au moins par sections un point destiné à la rupture entre une partie recevant le rail de conducteur plat (2, 2') et une partie recevant le conducteur (13).

2. Agencement de conducteur plat (1) selon la revendication 1, **caractérisé en ce que** le logement de conducteur (12) est réalisé par au moins un prolongement d'enveloppe de l'enveloppe en matière plastique (7, 7'), d'un seul tenant avec celle-ci.

3. Agencement de conducteur plat (1) selon la revendication 1 ou 2, **caractérisé en ce que** le logement de conducteur (12) est réalisé en forme de puits avec au moins une entretoise de guidage latérale (14-17) qui est agencée parallèlement et à distance d'un petit côté (3, 3', 4, 4') du rail de conducteur plat (2, 2').

4. Agencement de conducteur plat (1) selon l'une quelconque des revendications précédentes, **caractérisé en ce que** le logement de conducteur (12) peut être recouvert ou est recouvert par un élément de recouvrement (19) .

5. Agencement de conducteur plat (1) selon l'une quelconque des revendications précédentes, **caractérisé en ce que** le logement de conducteur (12) présente au moins une rainure de serrage (25, 26) pour serrer le conducteur (13).

6. Agencement de conducteur plat (1) selon l'une quelconque des revendications précédentes, **caractérisé en ce que** l'enveloppe en matière plastique (7, 7') est fabriquée à partir d'un premier composant en matière plastique et un deuxième composant en matière plastique (27, 27') est agencé entre le rail de conducteur plat (2, 2') et l'enveloppe en matière plastique (7, 7').

7. Agencement de conducteur plat (1) selon l'une quelconque des revendications précédentes, **caractérisé en ce qu'**au moins un élément fonctionnel mécanique (30, 30') est en outre formé sur l'enveloppe en matière plastique (7, 7').

8. Agencement de conducteur plat (1) selon la revendication 7, **caractérisé en ce que** l'élément fonctionnel (30, 30') est formé par au moins un prolongement d'enveloppe de l'enveloppe en matière plastique (7, 7') faisant saillie au moins par sections, d'un seul tenant avec celle-ci.

9. Agencement de conducteur plat (1) selon l'une quelconque des revendications 7 à 8, **caractérisé en ce que** l'élément fonctionnel (30, 30') est une patte de fixation s'étendant à partir d'un petit côté (8, 8' ; 9, 9') de l'enveloppe en matière plastique (7, 7'), avec au moins une ouverture de passage (31) pour la fixation sur un élément complémentaire.

10. Agencement de conducteur plat (1) selon l'une quelconque des revendications 7 à 9, **caractérisé en ce que** l'élément fonctionnel (30, 30') est une nervure s'étendant à partir d'un côté plat (10, 10' ; 11, 11') de l'enveloppe en matière plastique (7, 7').

11. Agencement de conducteur plat (1) selon l'une quelconque des revendications 7 à 10, **caractérisé en ce que** l'élément fonctionnel (30, 30') est une entretoise de guidage et/ou de retenue s'étendant dans la direction de l'épaisseur de l'agencement de conducteur plat (1).

12. Procédé de fabrication d'un agencement de conducteur plat électrique selon l'une quelconque des revendications 1 à 11, comprenant les étapes suivantes :
- la fourniture d'au moins un rail de conducteur plat (2, 2'), et
- l'extrusion d'une enveloppe en matière plastique (7, 7') autour du rail de conducteur plat (2, 2') ou la fourniture de l'enveloppe en matière plastique (7, 7') extrudée séparément,
**caractérisé par**
la formation d'au moins un logement de conducteur (12) sur l'enveloppe en matière plastique (7, 7') pour au moins un conducteur (13) souple en flexion, guidé au moins par sections parallèlement au rail de conducteur plat (2, 2'),
l'enveloppe en matière plastique (7, 7') présentant au moins par sections une rainure de coupe (32) pour séparer par sections une partie recevant le conducteur (13) d'une partie recevant le rail de conducteur plat (2, 2') ou en ce que l'enveloppe en matière plastique (7, 7') présente au moins par sections un point destiné à la rupture entre une partie recevant le rail de conducteur plat (2, 2') et une partie recevant le conducteur (13).

13. Procédé selon la revendication 12, **caractérisé en ce que** le logement de conducteur (12) est extrudé en même temps que l'enveloppe en matière plastique (7, 7').

14. Procédé selon la revendication 12 ou 13, **caractérisé en ce que** l'enveloppe en matière plastique (7, 7') est coextrudée à partir d'un premier composant en matière plastique ainsi que d'un deuxième composant en matière plastique (27, 27') différent de celui-ci.
